# EUROPÄISCHE PATENTSCHRIFT

(11) **EP 2 975 736 B1**
(45) Veröffentlichungstag und Bekanntmachung des Hinweises auf die Patenterteilung: **14.12.2016**
(21) Anmeldenummer: 14177449.7
(22) Anmeldetag: 17.07.2014
(51) Int. Cl.: H02K 3/50, H02K 5/04, H02K 5/15, H02K 15/12

(54) **Stator einer rotierenden elektrischen Maschine und dessen Herstellung**
Stator of a rotating electric machine and production of the same
Stator d'une machine électrique rotative et sa fabrication

(43) Veröffentlichungstag der Anmeldung: 20.01.2016
(73) Patentinhaber: Siemens Aktiengesellschaft, 80333 München (DE)
(72) Erfinder: Heim, Bruno, 97633 Grosseibstadt (DE)

(56) Entgegenhaltungen:
- GB-A- 1 450 501
- US-A1- 2010 019 588
- US-A1- 2010 102 667

## Beschreibung

Die Erfindung betrifft einen Stator einer rotierenden elektrischen Maschine und ein Verfahren zu dessen Herstellung.

Insbesondere betrifft die Erfindung einen Stator einer rotierenden elektrischen Maschine, der einen Anbauflansch zur Befestigung der elektrischen Maschine und zur Wärmeabfuhr aus der elektrischen Maschine aufweist. Zur Wärmeabfuhr ist der Anbauflansch dabei thermisch mit der Statorwicklung des Stators verbunden, so dass Wärme aus der Statorwicklung über den Anbauflansch an das Objekt abgegeben werden kann, an dem die elektrischen Maschine mittels des Anbauflansches befestigt ist. Die Statorwicklung ist dabei beispielsweise mittels eines Tauchverfahrens imprägniert. Beim Imprägnierverfahren wird das zu imprägnierende Bauteil in der Regel in ein (ungefülltes) Imprägnierharz eingetaucht, wieder ausgetaucht und ausgehärtet. Bei höherer Leistungsdichte wird der Stator zur verbesserten Wärmeabfuhr in der Regel vergossen. Beim Vergießen werden in der Regel formgebende Werkzeugteile im Bereich der Wickelköpfe der Statorwicklung und in der Bohrung des Stators eingesetzt, um die Bohrung in dem Stator von Vergussmasse freizuhalten. Die Vergussmasse wird von oben in die durch die formgebenden Werkzeugteile gebildete Gussform eingefüllt. Nach dem Füllvorgang wird die Vergussmasse mit der Gussform, beispielsweise in einem Ofen, ausgehärtet. Das Ein- und Ausformen der Gussform wird häufig händisch durchgeführt, was gegenüber der Imprägniertechnik zu einem deutlichen Mehraufwand führt. Mit dem Vergießprozess wird das Ziel verfolgt, die in der Wicklung entstehende Wärme durch thermische Anbindung besser nach außen abzuführen.

US 2010/0019588 A1 offenbart eine rotierende elektrische Maschine mit einer lastseitigen Halterung, die eine Rinne aufweist, in die ein lastseitiges Ende einer Statorwicklung eingesetzt ist.

GB 1 450 501 A offenbart ein Verfahren zur Herstellung einer rotierenden dynamoelektrischen Maschine mit einer Statorwicklung, die mit einer Vergussmasse vergossen ist.

US 2010/0102667 A1 offenbart eine Motorgehäusestruktur mit einem Stator und zwei Deckeln, die jeweils mit einem Ende des Stators verbunden sind.

Der Erfindung liegt die Aufgabe zugrunde, einen verbesserten Stator einer rotierenden elektrischen Maschine und ein verbessertes Verfahren zu dessen Herstellung anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Das erfindungsgemäße Verfahren dient der Herstellung eines Stators einer rotierenden elektrischen Maschine, der eine Statorwicklung mit einem Wickelkopf, der einen Endbereich der Statorwicklung an einem Statorende des Stators bildet, und ein an dem Statorende angeordnetes Abschlussbauteil, das eine ringförmig um eine Statorachse des Stators verlaufende Rinne aufweist, in die die Statorwicklung mit ihrem Wickelkopf hineinragt, umfasst. Dabei ist der Wickelkopf in der Rinne in eine elektrisch isolierende Vergussmasse eingegossen. Erfindungsgemäß wird der Stator zum Einbringen der Vergussmasse derart gelagert, dass die Statorwicklung mit ihrem Wickelkopf von oben in die Rinne des Abschlussbauteils hineinragt. Das Innere des Stators wird mit flüssiger Vergussmasse geflutet, so dass die Statorwicklung von der Vergussmasse umgeben wird und die Rinne mit Vergussmasse gefüllt wird. Die flüssige Vergussmasse wird aus dem Inneren des Stators abgelassen, wobei die Rinne mit Vergussmasse befüllt bleibt. Anschließend wird die Vergussmasse gehärtet.

Die ringförmige Rinne dient dabei als Gussform zum Vergießen des Wickelkopfes mit Vergussmasse. Dadurch werden vorteilhaft keine zusätzlichen formgebenden Werkzeuge zum Vergießen der Vergussmasse benötigt. Ferner entfällt vorteilhaft auch ein aufwändiges Ein- und Ausformen dieser Werkzeuge, so dass der Vergießprozess vereinfacht und verkürzt wird. Bei dem Verfahren werden vorteilhaft gleichzeitig der Wickelkopf in der Rinne in Vergussmasse eingegossen und die Statorwicklung außerhalb der Rinne mit der Vergussmasse imprägniert, ohne zusätzliche formgebenden Werkzeuge zum Vergießen der Vergussmasse zu verwenden, indem das Innere des Stators mit flüssiger Vergussmasse geflutet wird, die anschließend wieder abgelassen wird. Das Vergießen des Wickelkopfes in der Rinne gelingt dabei durch die in der Rinne verbleibende Vergussmasse, das Imprägnieren der Statorwicklung außerhalb der Rinne gelingt durch die dort verbleibende Benetzung mit Vergussmasse. Insgesamt vereinfacht und verkürzt das erfindungsgemäße Verfahren damit erheblich die Herstellung eines Stators mit einem eingegossenen Wickelkopf gegenüber herkömmlichen Verfahren, die Gussformen verwenden.

Eine Ausgestaltung der Erfindung sieht vor, dass die Vergussmasse ein Gießharz ist.

Diese Ausgestaltung der Erfindung nutzt vorteilhaft aus, dass Gießharz aufgrund seiner physikalischen und chemischen Eigenschaften als besonders geeignete Vergussmasse bekannt ist.

Eine weitere Ausgestaltung der Erfindung sieht vor, dass das Abschlussbauteil ein Lagerschild ist.

Dadurch wird die formgebende Rinne vorteilhaft in ein Lagerschild integriert, über das Wärme aus dem Wickelkopf abgeführt werden kann.

Eine weitere Ausgestaltung der Erfindung sieht vor, dass das Abschlussbauteil einen Anbauflansch zur Befestigung der elektrischen Maschine aufweist.

Dadurch kann Wärme aus dem Wickelkopf vorteilhaft über den Anbauflansch abgeführt werden.

In Abhängigkeit von der verwendeten Vergussmasse wird die Vergussmasse mittels Warmhärten oder Kalthärten gehärtet.

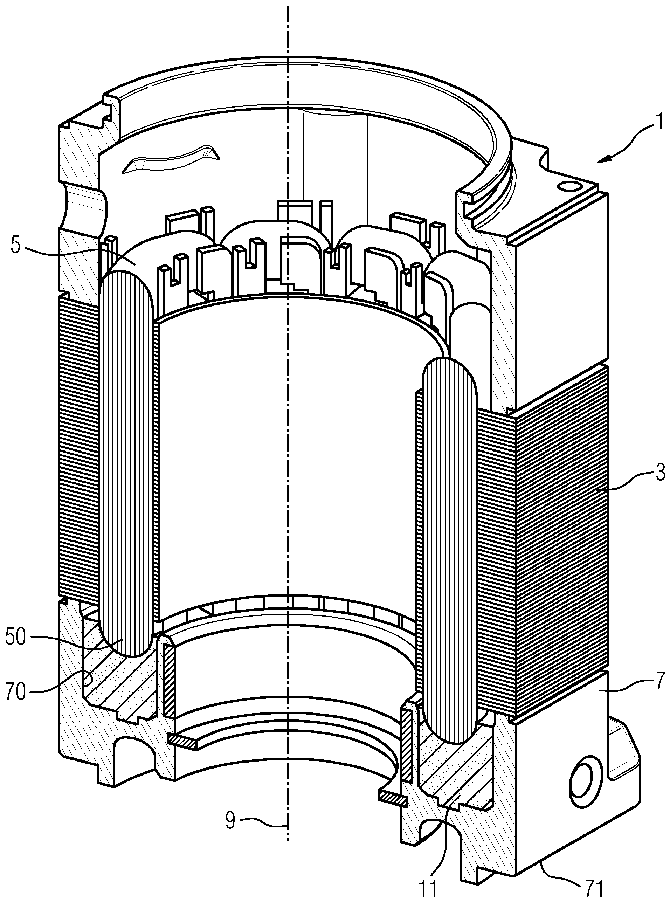

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit der Zeichnung näher erläutert wird.

Dabei zeigt die einzige Figur eine perspektivische Schnittdarstellung eines Stators 1 einer rotierenden elektrischen Maschine. Der Stator 1 umfasst ein Blechpaket 3, eine Statorwicklung 5 und ein an einem antriebsseitigen Statorende angeordnetes Abschlussbauteil 7.

Das Abschlussbauteil 7 ist als ein ringförmiges Lagerschild zur Aufnahme eines Lagers für eine Maschinenwelle der elektrischen Maschine ausgebildet. Das Abschlussbauteil 7 weist eine ringförmig um eine Statorachse 9 des Stators 1 verlaufende Rinne 70 auf, die zu der Statorwicklung 5 offen ist. Ferner weist das Abschlussbauteil 7 einen Anbauflansch 71 zur Befestigung und Entwärmung der elektrischen Maschine auf. Die um die Statorachse 9 herum verlaufenden Außenwände des Abschlussbauteil 7 und des Blechpakets 3 schließen an einander an. Das Abschlussbauteil 7 ist mit dem Blechpaket 3 dicht verschraubt.

Die Statorwicklung 5 weist einen Wickelkopf 50 auf, der einen Endbereich der Statorwicklung 5 an dem antriebsseitigen Statorende des Stators 1 bildet. Die Statorwicklung 5 ragt mit ihrem Wickelkopf 50 in die Rinne 70 des Abschlussbauteils 7 hinein und ist dort in eine elektrisch isolierende Vergussmasse 11 eingegossen. Die Vergussmasse 11 ist vorzugsweise ein Gießharz. Außerhalb der Rinne 70 ist die Statorwicklung 5 mit der Vergussmasse 11 imprägniert.

Bei der Herstellung eines Stators 1 wird der Stator 1 zum Einbringen der Vergussmasse 11 derart gelagert, dass die Statorwicklung 5 mit ihrem Wickelkopf 50 von oben in die Rinne 70 hineinragt. Das Innere des Stators 1 wird mit flüssiger Vergussmasse 11 geflutet, so dass die Statorwicklung 5 vollständig in Vergussmasse 11 steht und die Rinne 70 mit Vergussmasse 11 gefüllt ist. Anschließend wird die flüssige Vergussmasse 11 aus dem Inneren des Stators 1 abgelassen, wobei die Rinne 70 mit Vergussmasse 11 befüllt bleibt und die Statorwicklung 5 außerhalb der Rinne 70 mit Vergussmasse 11 benetzt bleibt. Abschließend wird die Vergussmasse 11 je nach Art der Vergussmasse 11 durch Warmhärten oder Kalthärten gehärtet.

Obwohl die Erfindung im Detail durch ein bevorzugtes Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Verfahren zur Herstellung eines Stators (1) einer rotierenden elektrischen Maschine, der Stator (1) umfassend
- eine Statorwicklung (5) mit einem Wickelkopf (50), der einen Endbereich der Statorwicklung (5) an einem Statorende des Stators (1) bildet,
- und ein an dem Statorende angeordnetes Abschlussbauteil (7), das eine ringförmig um eine Statorachse (9) des Stators (1) verlaufende Rinne (70) aufweist, in die die Statorwicklung (5) mit ihrem Wickelkopf (50) hineinragt,
- wobei der Wickelkopf (50) in der Rinne (70) in eine elektrisch isolierende Vergussmasse (11) eingegossen ist, **dadurch gekennzeichnet, dass** zum Einbringen der Vergussmasse (11)
- der Stator (1) derart gelagert wird, dass die Statorwicklung (5) mit ihrem Wickelkopf (50) von oben in die Rinne (70) des Abschlussbauteils (7) hineinragt,
- das Innere des Stators (1) mit flüssiger Vergussmasse (11) geflutet wird, so dass die Statorwicklung (5) von der Vergussmasse (11) umgeben wird und die Rinne (70) mit Vergussmasse (11) gefüllt wird,
- die flüssige Vergussmasse (11) aus dem Inneren des Stators (1) abgelassen wird, wobei die Rinne (70) mit Vergussmasse (11) befüllt bleibt,
- und die Vergussmasse (11) anschließend gehärtet wird.

2. Verfahren nach Anspruch 1,
**dadurch gekennzeichnet, dass** die Vergussmasse (11) ein Gießharz ist.

3. Verfahren nach einem der vorhergehenden Ansprüche, **dadurch gekennzeichnet, dass** das Abschlussbauteil (7) ein Lagerschild ist.

4. Verfahren nach einem der vorhergehenden Ansprüche, **dadurch gekennzeichnet, dass** das Abschlussbauteil (7) einen Anbauflansch (71) zur Befestigung der elektrischen Maschine aufweist.

5. Verfahren nach einem der vorhergehenden Ansprüche, **dadurch gekennzeichnet, dass** die Vergussmasse (11) mittels Warmhärten gehärtet wird.

6. Verfahren nach einem der Ansprüche 1 bis 4, **dadurch gekennzeichnet, dass** die Vergussmasse (11) mittels Kalthärten gehärtet wird.

## Claims

1. Method for producing a stator (1) of a rotating electric machine, the stator (1) comprising
- a stator winding (5) with a winding head (50), which forms an end region of the stator winding (5) at a stator end of the stator (1),
- and an adjacent component (7) arranged at the stator end, which has a channel (70) which runs annularly about a stator axis (9) of the stator (1), into which channel the stator winding (5) protrudes with its winding head (50),
- wherein the winding head (50) in the channel (70) is cast in an electrically insulting casting compound (11), **characterised in that** in order to introduce the casting compound (11),
- the stator (1) is mounted such that the stator winding (5) with its winding head (50) protrudes from above into the channel (70) of the adjacent component (7),
- the interior of the stator (1) is flooded with liquid casting compound (11) so that the stator winding (5) is surrounded by the casting compound (11) and the channel (70) is filled with casting compound (11),
- the liquid casting compound (11) is drained from the interior of the stator (1), wherein the channel (70) remains filled with casting compound (11),
- and the casting compound (11) is then cured.

2. Method according to claim 1,
**characterised in that**,
the casting compound (11) is a cast resin.

3. Method according to one of the preceding claims, **characterised in that** the adjacent component (7) is a bearing shield.

4. Method according to one of the preceding claims, **characterised in that** the adjacent component (7) has a mounting flange (71) for fastening the electric machine.

5. Method according to one of the preceding claims, **characterised in that** the casting compound (11) is cured using hot-setting.

6. Method according to one of claims 1 to 4, **characterised in that** the casting compound (11) is cured using cold-setting.

## Revendications

1. Procédé de fabrication d'un stator (1) d'une machine électrique tournante, le stator (1) comprenant
- un enroulement (5) statorique ayant une tête (50) de bobine, qui forme une partie d'extrémité de l'enroulement (5) statorique à une extrémité du stator (1),
- et une pièce (7) de fermeture disposée à l'extrémité du stator et ayant une rainure (70), qui s'étend annulairement autour d'un axe (9) du stator (1) et dans laquelle l'enroulement (5) statorique pénètre par sa tête (50) d'enroulement,
- dans lequel la tête (5) d'enroulement est scellée dans la rainure (70) dans une masse (11) de scellement isolante du point de vue électrique,
**caractérisé en ce que**, pour introduire la masse (11) de scellement,
- on monte le stator (1), de manière à ce que l'enroulement (5) statorique pénètre, par sa tête (50) d'enroulement, par le haut, dans la rainure (70) de la pièce (7) de fermeture,
- on inonde l'intérieur du stator (1) de la masse (11) de scellement liquide, de manière à entourer l'enroulement (5) statorique de la masse (11) de scellement et à remplir la rainure (70) de la masse (11) de scellement,
- on fait sortir la masse (11) de scellement liquide de l'intérieur du stator (1), la rainure (70) restant remplie de la masse (11) de scellement,
- et on durcit ensuite la masse (11) de scellement.

2. Procédé suivant la revendication 1,
**caractérisé en ce que** la masse (11) de scellement est une résine de coulée.

3. Procédé suivant l'une des revendications précédentes, **caractérisé en ce que** la pièce (7) de fermeture est un flasque.

4. Procédé suivant l'une des revendications précédentes, **caractérisé en ce que** la pièce (7) de fermeture a une bride (71) de montage pour la fixation de la machine électrique.

5. Procédé suivant l'une des revendications précédentes, **caractérisé en ce qu'**on durcit la masse (11) de scellement au moyen d'un durcissement à la chaleur.

6. Procédé suivant l'une des revendications 1 à 4, **caractérisé en ce qu'**on durcit la masse (11) de scellement au moyen d'un durcissement à froid.
